# EUROPÄISCHE PATENTANMELDUNG

(11) **EP 2 439 465 A2**
(43) Veröffentlichungstag der Anmeldung: **11.04.2012**
(21) Anmeldenummer: 11455001.5
(22) Anmeldetag: 30.09.2011
(51) Int. Cl.: F24J 2/54

(54) **Solaranlage**

(30) Priorität: 06.10.2010 AT 16622010
(71) Anmelder: Haas, Theodor, 4470 Enns (AT)
(72) Erfinder: Haas, Theodor, 4470 Enns (AT)
(74) Vertreter: Hübscher, Helmut

(57) **Zusammenfassung**

Es wird eine Solaranlage mit einem gegenüber dem Azimut der Sonne ausrichtbaren Träger (1) für in einem gegenseitigen Abstand der Höhe nach in einer Reihe übereinander auf dem gemeinsamen Träger (1) angeordnete, in Bezug auf einen vorgegebenen Einfallswinkel der Sonnenstrahlung einheitlich gegenüber dem Träger (1) ausgerichtete Solarfelder (2) beschrieben. Um vorteilhafte Bedingungen für die Sonneneinstrahlung zu erreichen, wird vorgeschlagen, der entlang einer bodenseitigen Führung (3) verfahrbare und dabei gegenüber dem Azimut der Sonne ausrichtbare Träger (1) in einem mit Abstand oberhalb der Führung (3) angeordneten Drehlager geführt ist, wobei die Führung (3) zwei in Bezug auf den Azimut des höchsten Sonnenstands divergierende und miteinander durch einen bogenförmigen Abschnitt (5) verbundene Führungsabschnitte (4) umfasst und sich das Drehlager (6) zwischen den beiden divergierenden Führungsabschnitten (4) in einem dem Bogenabschnitt (5) gegenüberliegenden Bereich befindet.

## Beschreibung

Die Erfindung bezieht sich auf eine Solaranlage mit einem gegenüber dem Azimut der Sonne ausrichtbaren Träger für in einem gegenseitigen Abstand der Höhe nach in einer Reihe übereinander auf dem gemeinsamen Träger angeordnete, in Bezug auf einen vorgegebenen Einfallswinkel der Sonnenstrahlung einheitlich gegenüber dem Träger ausgerichtete Solarfelder.

Um Sonnenenergie vorteilhaft nützen zu können, sind die hiefür eingesetzten Solarfelder gegenüber der einfallenden Sonnenstrahlung auszurichten, und zwar unabhängig davon, ob es sich um Solarfelder auf der Basis von Sonnenkollektoren oder der Photovoltaik handelt. Zu diesem Zweck werden die Solarfelder gegenüber dem Einfallswinkel der Sonnenstrahlung, also der Höhe des Sonnenstands, ausgerichtet und dem Azimut der Sonne nachgeführt, wobei unterschiedliche Vorrichtungen zum Nachführen der Solarfelder eingesetzt werden können. So ist es beispielsweise zur Konstruktionsvereinfachung bekannt (WO 2008/010250 A2), die einzelnen Solarfelder in einer Reihe hintereinander auf einem gemeinsamen Träger je für sich um eine horizontale und eine vertikale Achse schwenkbar zu lagern und über ein Hebelgestänge gemeinsam zu verstellen, um durch ein Verschwenken der einzelnen Solarfelder um ihre horizontale Schwenkachse eine gute Ausrichtung gegenüber dem Einfallswinkel der Sonnenstrahlung zu erreichen und durch eine schrittweise Drehverstellung um die vertikalen Achsen eine Nachführung entsprechend dem Azimut der Sonne zu sichern. Solche Solaranlagen eignen sich für Großanlagen, sind aber für die Energieversorgung beispielsweise im Wohnhausbereich zu aufwendig.

Bei einer anderen bekannten Solaranlage (EP 2163 834 A1) ist ein unter einem vorgegebenen Winkel gegenüber einer vertikalen Säule geneigter Träger vorgesehen, auf dem eine Mehrzahl von Solarfeldern mit gegenseitigem Abstand der Höhe nach in einer Reihe übereinander angeordnet und jeweils um eine horizontale Achse schwenkbar gelagert sind. Da der Träger zusätzlich auf der Säule um ihre Achse drehbar gelagert ist, können die Solarfelder nicht nur gegenüber dem Einfallswinkel der Sonnenstrahlung, sondern mittels des Trägers auch gegenüber dem Azimut der Sonne ausgerichtet werden, was jedoch voneinander gesonderte Nachführeinrichtungen gegenüber dem Einfallswinkel der Sonnenstrahlung und dem Sonnenazimut erfordert.

Zur Nachführung eines Solarfeldes entsprechend dem Azimut der Sonne ist es schließlich bekannt (SU 1 037 025 A), den Grundrahmen eines Gestells in Form eines gleichseitigen Dreiecks auf einer Kreisführung zu lagern, sodass das Gestell um die Mittelpunktachse der Kreisführung gedreht werden kann. Da das Solarfeld in diesem Gestell um eine zu einer Dreieckseite des Grundrahmens parallele Achse schwenkverstellbar gelagert ist, ergibt sich wiederum die voneinander gesonderten Möglichkeiten zum Nachführen des Solarfeldes entsprechend dem Einfallswinkel der Sonnenstrahlung und dem Azimut der Sonne.

Der Erfindung liegt somit die Aufgabe zugrunde, eine Solaranlage so auszugestalten, dass mit einem vergleichsweise geringen Steuer- und Konstruktionsaufwand die Sonnenenergie wirkungsvoll über Solarfelder aufgenommen werden kann.

Ausgehend von einer Solaranlage der eingangs geschilderte Art löst die Erfindung die gestellte Aufgabe dadurch, dass der entlang einer bodenseitigen Führung verfahrbare und dabei gegenüber dem Azimut der Sonne ausrichtbare Träger in einem mit Abstand oberhalb der Führung angeordneten Drehlager geführt ist, wobei die Führung zwei in Bezug auf den Azimut des höchsten Sonnenstands divergierende und miteinander durch einen bogenförmigen Abschnitt verbundene Führungsabschnitte umfasst und sich das Drehlager zwischen den beiden divergierenden Führungsabschnitten in einem dem Bogenabschnitt gegenüberliegenden Bereich befindet.

Durch diese Maßnahmen werden die bezüglich eines vorgegebenen Einfallswinkels der Sonnenstrahlung einheitlich gegenüber dem Träger ausgerichteten Solarfelder durch die Führung des Trägers entlang einer gegenüber dem Azimut des höchsten Sonnenstands ausgerichteten Führung dem Sonnenazimut nachgeführt und gleichzeitig an den Höhenwinkel des Sonnenstands angepasst, weil der Träger mit Abstand oberhalb der Führung in einem Drehlager gehalten wird. Aufgrund der Zuordnung dieses Drehlagers zu den beiden gegenüber dem Azimut des höchsten Sonnenstands divergierenden Führungsabschnitten bedingt eine Bewegung des Trägers entlang dieser Führungsabschnitte gegen den diese Führungsabschnitte verbindenden Bogenabschnitt hin eine zunehmende Neigung des Trägers. Der Träger wird ja im Bereich des Drehlagers gegenüber seiner Bewegung entlang der Führung zurückgehalten. Im Bereich des Bogenabschnitts der Führung erreicht die Trägerneigung ihr Maximum und nimmt dann wieder ab, wenn der Träger vom Bogenabschnitt weg entlang des gegenüberliegenden Führungsabschnitts gegen das Drehlager hin verlagert wird. Mit einer entsprechenden Wahl der Größenverhältnisse können somit durch eine solche Führung des Trägers die auf den Träger unter einem vorgegebenen Winkel geneigt angeordneten Solarfelder nicht nur dem Sonnenazimut nachgeführt, sondern auch gegenüber der jeweiligen Höhe des Sonnenstands geneigt werden, sodass sich hinsichtlich des Einfallswinkels der Sonnenstrahlung vorteilhafte Bedingungen ergeben, ohne die Solarfelder je für sich gegenüber dem Sonnenstand ausrichten zu müssen.

Die Lagerung des Trägers einerseits in einem mit Abstand oberhalb der Führung vorgesehenen Drehlager und anderseits auf dieser Führung bedingt aufgrund des sich entlang der Führung ändernden Abstands zwischen Drehlager und Führung, dass sich der Träger entsprechend neigt. Um diese Neigung konstruktiv zu berücksichtigen, kann der Träger ein Fahrgestell mit zwei auf einer Laufschiene der Führung abrollenden Laufrollen aufweisen, wobei der Träger auf dem um die Laufschiene als Achse schwenkbaren Fahrgestell um eine Querachse schwenkbar gelagert ist. Damit ist eine Schwenkbarkeit des Trägers um zwei zueinander quer gerichtete Achsen sichergestellt, sodass der Träger bei seiner Verlagerung entlang der Führung zwängungsfrei der durch seine Abstützung einerseits auf der Führung und anderseits im Drehlager vorgegebenen Neigung folgen kann.

Die sich entlang der Führung ergebende Abstandänderung zwischen dem Drehlager und der Führung bedingt eine entsprechende axiale Verschiebung des Trägers gegenüber dem Drehlager sowie die Möglichkeit einer allseitigen Verschwenkung des Trägers gegenüber der Achse des Drehlagers. Um diese Bedingungen in konstruktiv einfacher Art berücksichtigen zu können, kann der Träger eine im Drehlager axial verschiebbar geführte, allseits begrenzt verschwenkbare Führungsachse aufweisen.

Obwohl sich hinsichtlich des Antriebs des Trägers entlang der bodenseitigen Führung verschiedene konstruktive Lösungen ergeben, werden besonders einfache Konstruktionsverhältnisse dadurch geschaffen, dass entlang der Führung eine Laschenkette verlegt wird, in die ein dem Fahrgestell zugeordnetes, antreibbares Kettenrad eingreift, weil mit dem in eine Laschenkette eingreifenden Kettenrad unterschiedliche Schwenklagen des Fahrgestells berücksichtigt werden können. Allenfalls ist das Kettenrad der Höhe nach verschiebbar auf dem Fahrgestell zu lagern, um einen Längenausgleich zu ermöglichen, wenn die Schwenkachse des Fahrgestells nicht im Eingriffsbereich des Kettenrades verläuft.

Bei einer freistehenden Anordnung des Trägers mit den Solarfeldern empfiehlt sich eine Anordnung, bei der das Drehlager im Bereich der Symmetrieebene zwischen den beiden divergierenden Führungsabschnitten angeordnet ist, weil von einem bezüglich des Sonnenhöchststandes symmetrischen Verlauf des Sonnenstands während eines Tags ausgegangen werden kann. In Verbindung der Solaranlage mit einem Gebäude kann die Führung auf der den Bogenabschnitt gegenüberliegenden Seite an das Gebäude anschließen, das mit einem Außeneck zwischen die beiden divergierenden Führungsabschnitte ragt und einen zwischen die divergierenden Führungsabschnitte vorstehenden Ausleger für das Drehlager zur Führung des Trägers aufweist. Damit in diesem Fall in den Endstellungen des Trägers am Morgen und am Abend der Träger mit den Solarfeldern vorteilhaft an das Gebäude anschließen kann, kann einer der beiden divergierenden Führungsabschnitte im Wesentlichen quer zur anschließenden Eckwand des Gebäudes und der andere Führungsabschnitt angenähert in Richtung der anderen Eckwand verlaufen, wobei das Drehlager näher dem in Richtung dieser Eckwand verlaufenden Führungsabschnitt angeordnet ist. Durch diese Maßnahme kann der Träger mit den Solarfeldern in den beiden Endstellungen mit geringem Abstand an die beiden ein Außeneck bildenden Eckwände anschließen. Die durch die außermittige Anordnung des Drehlagers bedingte unterschiedliche Neigung des Trägers in den beiden Endlagen der Führung spielt hinsichtlich der Sonneneinstrahlung keine ins Gewicht fallende Rolle, weil diese Neigungsunterschiede vergleichsweise gering ausfallen.

Um die Neigungsverstellung des Trägers während eines Umlaufs entlang der Führung zu ändern, kann der Abstand des Drehlagers vom Bogenabschnitt der Führung einstellbar ausgeführt werden. Bei einer bezüglich der Führung symmetrischen Anordnung des Drehlagers im den Bogenabschnitt gegenüberliegenden Führungsbereich bestimmt ja der Abstand des Drehlagers vom Scheitel dieses Bogenabschnitts die größte Neigung des Trägers.

In der Zeichnung ist der Erfindungsgegenstand beispielsweise dargestellt. Es zeigen
- Fig. 1: eine erfindungsgemäße Solaranlage in einer vereinfachten Draufsicht,
- Fig. 2: die Solaranlage nach Fig. 1 in einer gegenüber dem Azimut des Son-nenhöchststandes ausgerichteten Stellung in einem Schaubild,
- Fig. 3: die Abstützung des Trägers auf der Führung über ein Fahrgestell in einer Ansicht in Führungslängsrichtung in einem größeren Maßstab,
- Fig. 4: eine an ein Außeneck eines Gebäudes anschließende Solaranlage in einer vereinfachten Draufsicht,
- Fig. 5: diese Solaranlage in einer Vorderansicht und
- Fig. 6: die Solaranlage nach den Fig. 4 und 5 in einem Schaubild in einer nach dem Azimut des höchsten Sonnenstands ausgerichteten Stel-lung.

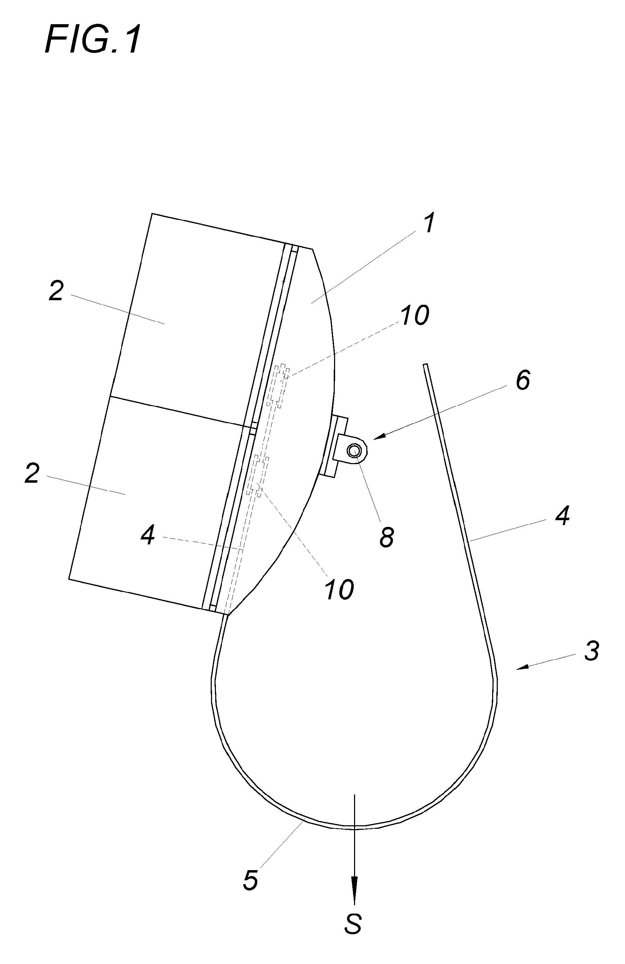

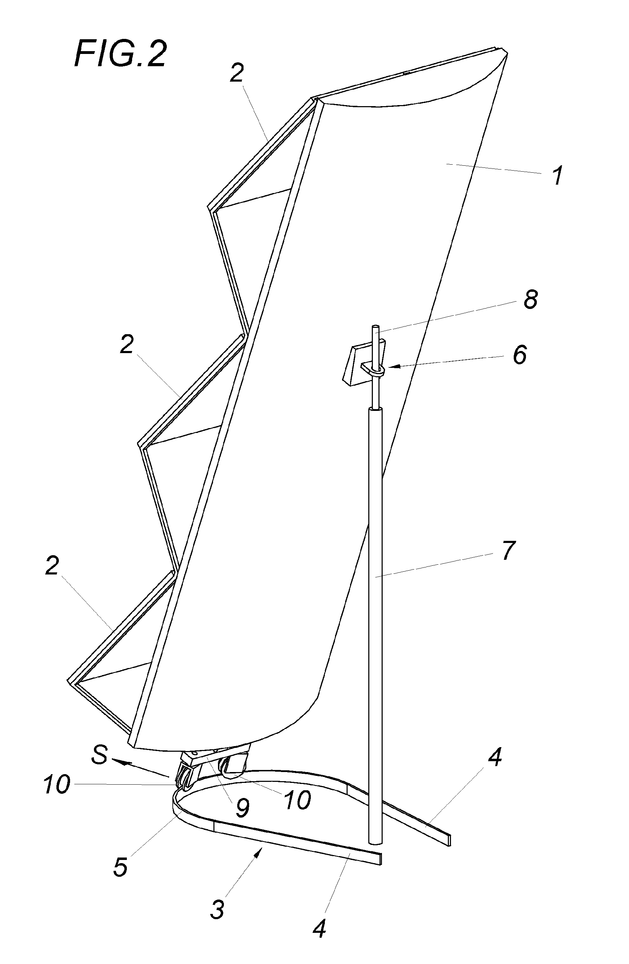

Die Solaranlage nach den Fig. 1 und 2 weist einen Träger 1 für der Höhe nach in einer Reihe hintereinander angeordnete Solarfelder 2 auf, die gegenüber dem Träger 1 in Abhängigkeit von einem vorgegebenen Einfallswinkel für die Sonnenstrahlung einheitlich geneigt sind und in Reihenlängsrichtung einen gegenseitigen Abstand aufweisen, der verhindert, dass der Schlagschatten eines Solarfeldes 2 die Sonneneinstrahlung eines darunterliegenden Solarfeldes 2 beeinträchtigen kann. Der Träger 1 wird bodenseitig entlang einer Führung 3 geführt, die sich aus zwei bezüglich des Azimuts des höchsten Sonnenstands, also auf der nördlichen Hemisphäre bezüglich der Südrichtung S, divergierenden Führungsabschnitten 4 und einem diese Führungsabschnitte 4 miteinander verbindenden Bogenabschnitt 5 zusammensetzt. Zwischen den beiden Führungsabschnitten 4 der Führung 3 ist eine ein Drehlager 6 für den Träger 1 bildende Führungssäule 7 angeordnet. Dieses Drehlager 6 lässt nicht nur eine axiale Verschiebung bezüglich der von der Führungssäule 7 getragenen Führungsachse 8, sondern auch eine allseits begrenzte Verschwenkung der Führungsachse 8 gegenüber dem Drehlager 6 zu.

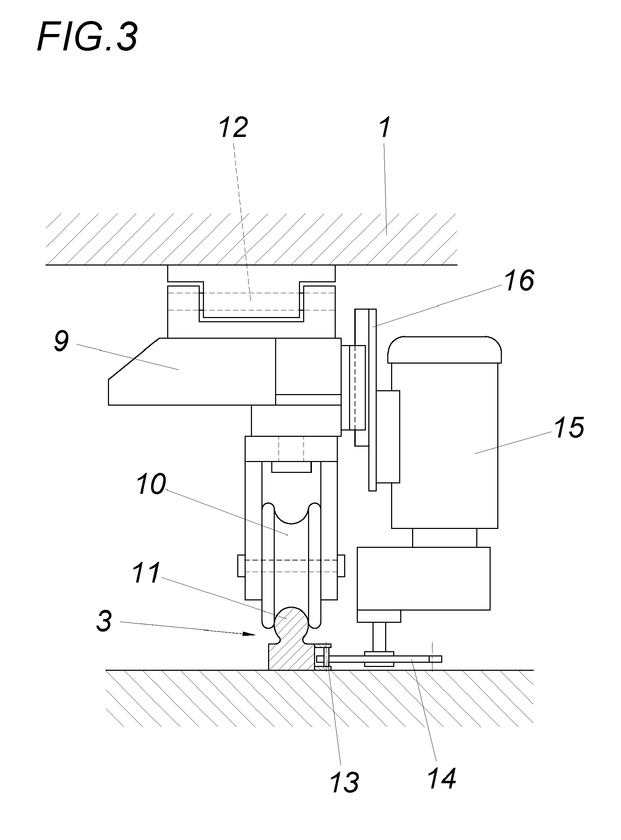

Der Träger 1 ist mit Hilfe eines Fahrgestells 9 auf der Führung 3 abgestützt. Dieses Fahrgestell 9 bildet zwei Laufrollen 10, die auf einer durch die Führung 3 gebildeten Laufschiene 11 abrollen, wie dies insbesondere der Fig. 3 entnommen werden kann. Die Laufschiene 11 bildet dabei für das Fahrgestell 9 eine Schwenkachse. Der Träger 1 selbst ist auf dem Fahrgestell 9 über eine Querachse 12 schwenkbar gelagert. Aufgrund dieser Verschwenkmöglichkeiten des Trägers 1 um zwei quer zueinander verlaufende Achsen, nämlich der Laufschiene 11 und der Querachse 12, kann der Träger 1 trotz seiner durch die beiden Laufrollen 10 bedingten Ausrichtung in Längsrichtung der Führung 3 zwängungsfrei die durch das Drehlager 6 bedingte Neigung einnehmen. Die Ausrichtung des Trägers 1 in Längsrichtung der Führung 3 erlaubt die Nachführung der Solarfelder 2 entsprechend dem Sonnenazimut, während die durch den entlang der Führung 3 unterschiedlichen Abstand der Führungssäule 7 von der Führung 3 bestimmte unterschiedliche Neigung des Trägers 1 eine vorteilhafte Ausrichtung der Solarfelder 2 gegenüber der jeweiligen Höhe des Sonnenstands erlaubt, wenn der Träger 1 im Tagesverlauf vom östlichen Führungsabschnitt 4 über den Bogenabschnitt 5 zum westlichen Führungsabschnitt 4 der Führung 3 verlagert wird.

Zum Verfahren des Fahrgestells 9 entlang der Führung 3 könnte zumindest eine der beiden Laufrollen 10 angetrieben werden. Im Hinblick auf die durch die Laufschiene 11 der Führung 3 gegebenen Schwenkachse für das Fahrgestell 9 werden vorteilhafte Konstruktionsverhältnisse dadurch erreicht, dass entlang der Führung 3, und zwar auf der Außenseite, eine Laschenkette 13 gespannt wird, in die ein Kettenrad 14 eingreift, das über einen Getriebemotor 15 angetrieben wird. Um bei einem Verschwenken des Fahrgestells 9 um die Laufschiene 11 als Schwenkachse einen Längenausgleich zu schaffen, ist der Getriebemotor 15 mit dem Kettenrad 14 der Höhe nach verschiebbar am Gestell 9 gelagert. Die Schiebeführung ist mit 16 bezeichnet.

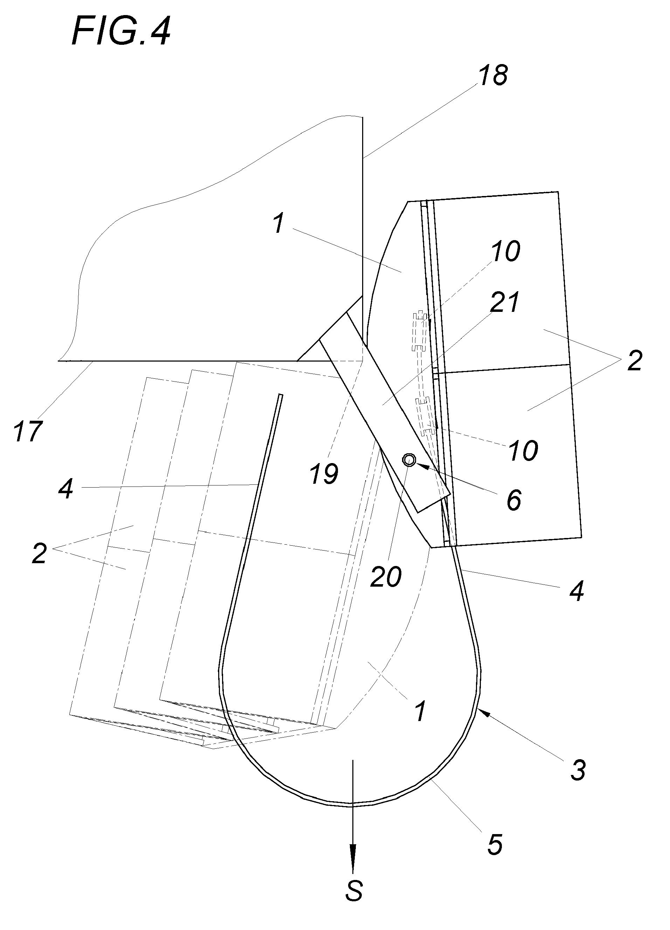

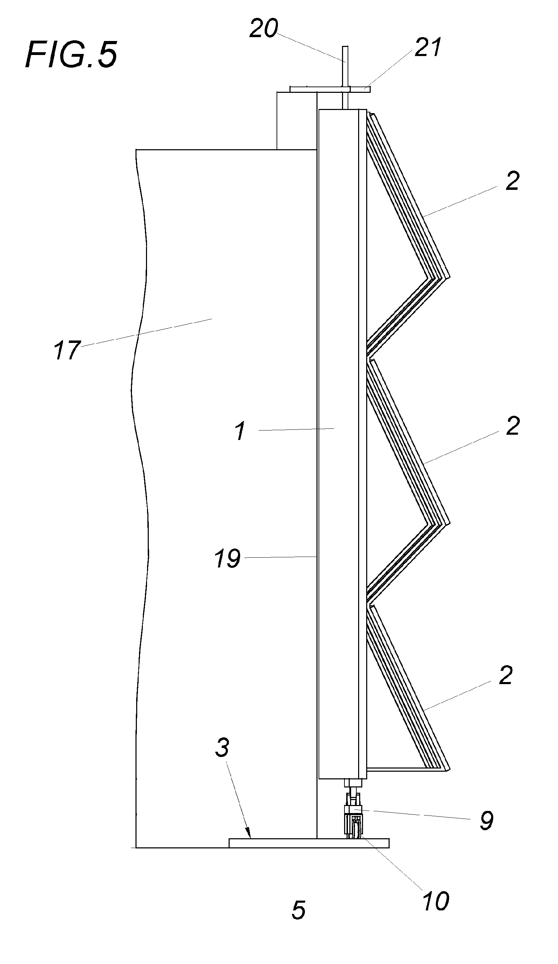

Das Ausführungsbeispiel nach den Fig. 4 bis 6 unterscheidet sich von dem nach den Fig. 1 bis 3 im Wesentlichen dadurch, dass die Solaranlage im Anschluss an ein durch zwei Eckwände 17 und 18 gebildetes Außeneck 19 eines nicht näher dargestellten Gebäudes angeordnet ist, was einige konstruktive Änderungen verlangt, wenn in den beiden Endstellungen des Trägers 1 am Morgen und am Abend der Träger mit den Solarfeldern 2 nahe an das Gebäude herangeführt werden soll. Wie sich insbesondere aus der Fig. 4 ergibt, verläuft zu diesem Zweck der eine der beiden Führungsabschnitte 4, im Ausführungsbeispiel der westliche Führungsabschnitt 4, im Wesentlichen quer zur anschließenden Eckwand 17, während der andere, im Ausführungsbeispiel der östliche Führungsabschnitt 4, angenähert in Richtung der anschließenden Eckwand 18 ausgerichtet ist. Da außerdem das Drehlager 6 näher dem in Richtung der anschließenden Eckwand 18 verlaufenden Führungsabschnitt 4 angeordnet ist, befindet sich der Träger 1 in der in vollen Linien dargestellten Endlage im unmittelbaren Anschluss an die Eckwand 18, zumal die in das Drehlager 6 eingreifende Führungsachse 20 des Trägers 1 bezüglich der Längsmitte des Trägers 1 außermittig angeordnet ist. In der gegenüberliegenden, strichpunktiert angedeuteten Endlage des Trägers 1 schließt die Eckwand 17 seitlich an die Solarfelder 2 an, sodass sich wiederum eine an das Gebäude angepasste Endstellung für den Träger 1 ergibt. Das Drehlager 6 selbst wird von einem Ausleger 21 gebildet, der am Gebäude im Bereich des Außenecks 19 angeordnet ist und oberhalb des Trägers 1 verläuft, wie sich dies unmittelbar aus der Fig. 5 ergibt.

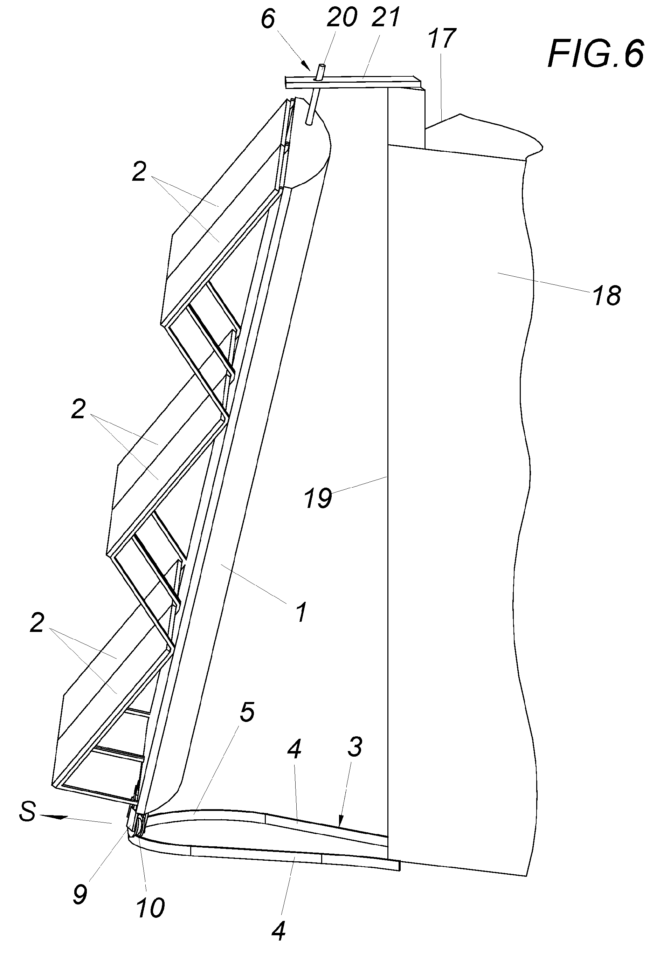

Wird der Träger 2 aus der in den Fig. 4 und 5 dargestellten, nach Osten ausgerichteten Endlage für die Morgensonne entlang der Führung 3 verlagert, so werden die Solarfelder 2 unter einer zunehmenden Neigung entsprechend dem zunehmenden Höhenwinkel des Sonnenstands geneigt und dem Azimut der Sonne nachgeführt, bis im Bereich des Azimuts für den höchsten Sonnenstand gemäß der Fig. 6 die größte Neigung der Solarfelder 2 erreicht wird. Im weiteren Verlauf des Sonnenstands nimmt der Höhenwinkel ab, was durch eine entsprechende Verringerung der Neigung des Trägers 1 während seiner Verlagerung entlang des westlichen Führungsabschnitts 4 berücksichtigt wird.

## Patentansprüche

1. Solaranlage mit einem gegenüber dem Azimut der Sonne ausrichtbaren Träger (1) für in einem gegenseitigen Abstand der Höhe nach in einer Reihe übereinander auf dem gemeinsamen Träger (1) angeordnete, in Bezug auf einen vorgegebenen Einfallswinkel der Sonnenstrahlung einheitlich gegenüber dem Träger (1) ausgerichtete Solarfelder (2), **dadurch gekennzeichnet, dass** der entlang einer bodenseitigen Führung (3) verfahrbare und dabei gegenüber dem Azimut der Sonne ausrichtbare Träger (1) in einem mit Abstand oberhalb der Führung (3) angeordneten Drehlager geführt ist, wobei die Führung (3) zwei in Bezug auf den Azimut des höchsten Sonnenstands divergierende und miteinander durch einen bogenförmigen Abschnitt (5) verbundene Führungsabschnitte (4) umfasst und sich das Drehlager (6) zwischen den beiden divergierenden Führungsabschnitten (4) in einem dem Bogenabschnitt (5) gegenüberliegenden Bereich befindet.

2. Solaranlage nach Anspruch 1, **dadurch gekennzeichnet, dass** der Träger (1) ein Fahrgestell (9) mit zwei auf einer Laufschiene (11) der Führung (3) abrollenden Laufrollen (10) aufweist und dass der Träger (1) auf dem um die Laufschiene (11) als Achse schwenkbaren Fahrgestell (9) um eine Querachse (12) schwenkbar gelagert ist.

3. Solaranlage nach Anspruch 1 oder 2, **dadurch gekennzeichnet, dass** der Träger (1) eine im Drehlager (6) axial verschiebbar geführte, allseits begrenzt verschwenkbare Führungsachse (8, 20) aufweist.

4. Solaranlage nach Anspruch 2 oder 3, **dadurch gekennzeichnet, dass** entlang der Führung (3) eine Laschenkette (13) verlegt ist, in die ein dem Fahrgestell (9) zugeordnetes, antreibbares Kettenrad (14) eingreift.

5. Solaranlage nach Anspruch 4, **dadurch gekennzeichnet, dass** das antreibbare Kettenrad (14) der Höhe nach verschiebbar auf dem Fahrgestell (9) gelagert ist.

6. Solaranlage nach einem der Ansprüche 1 bis 5, **dadurch gekennzeichnet, dass** das Drehlager (6) im Bereich der Symmetrieebene zwischen den beiden divergierenden Führungsabschnitten (4) angeordnet ist.

7. Solaranlage nach einem der Ansprüche 1 bis 5, **dadurch gekennzeichnet, dass** die Führung (3) auf der dem Bogenabschnitt (5) gegenüberliegenden Seite an ein Gebäude anschließt, das mit einem Außeneck (19) zwischen die beiden divergierenden Führungsabschnitte (4) der Führung (3) ragt und einen zwischen die divergierenden Führungsabschnitte (4) vorstehenden Ausleger (21) für das Drehlager (6) zur Führung des Trägers (1) aufweist.

8. Solaranlage nach Anspruch 7, **dadurch gekennzeichnet, dass** einer der beiden divergierenden Führungsabschnitte (4) im Wesentlichen quer zur anschließenden Eckwand (17) des Gebäudes und der andere Führungsabschnitt (4) angenähert in Richtung der anschließenden Eckwand (18) verlaufen und dass das Drehlager (6) näher dem in Richtung der anschließenden Eckwand (17) verlaufenden Führungsabschnitt (4) angeordnet ist.

9. Solaranlage nach einem der Ansprüche 1 bis 8, **dadurch gekennzeichnet, dass** der Abstand des Drehlagers (6) vom Bogenabschnitt (5) der Führung (3) einstellbar ist.
